# EUROPEAN PATENT APPLICATION

(11) **EP 1 519 537 A2**
(43) Date of publication of application: **30.03.2005**
(21) Application number: 04255895.7
(22) Date of filing: 27.09.2004
(51) Int. Cl.: H04L 29/06

(54) **Network system and protocol-converter for use therein**

(30) Priority: 25.09.2003 JP 2003333280
(71) Applicant: NEC CORPORATION, Tokyo (JP)
(72) Inventor: Tsunoda, Tetsuhiro c/o NEC Corporation, Tokyo (JP)
(74) Representative: Moir, Michael Christopher

(57) **Abstract**

A network system for allowing a HTTP-based terminal (1) to receive SIP-based services includes: (a) a first module (3) for storing therein presence information relating to a SIP-based terminal (5) and the HTTP-based terminal (1); (b) a second module (4) for carrying out SIP-based services; and, (c) a protocol-converter (2) which, on receipt of a request from the HTTP-based terminal (1) to carry out SIP-based services, transmits a result to the HTTP-based terminal as to how the SIP-based services were carried out in the first and second modules (3, 4), and which, on receipt of a request to carry out SIP-based services from the SIP-based terminal (5) in communication with the HTTP-based terminal, transmits to the HTTP-based terminal, in response to a request to do so from the HTTP-based terminal, a result as to how the SIP-based service was carried out in the first and second modules (3, 4).

## Description

### BACKGROUND OF THE INVENTION

### FIELD OF THE INVENTION

The invention relates to a network which allows a terminal operating in accordance with HTTP (Hyper-Text Transfer Protocol) to receive services presented through SIP (Session Initiation Protocol) or SIMPLE (SIP for Instant Messaging and Presence Leveraging Extensions). The invention further relates to a protocol-converter which allows a terminal operating in accordance with HTTP to receive services presented through SIP or SIMPLE, a method of allowing a HTTP-based terminal to receive SIP-based services, and a program for causing a computer to carry out a method of allowing a HTTP-based terminal to receive SIP-based services.

### DESCRIPTION OF THE PRIOR ART

SIP and SIMPLE have become popular as protocols for transmitting or receiving, through the Internet or a mobile network, messages and presence information such as information about sites where callers are presently located or information indicative of a condition of a caller or a thing. The specification of SIP/SIMPLE is disclosed, for instance, in the following documents:

J. Rosenberg, H. Schulzrinne, G. Camarillo, A. Johnston, J. Peterson, R. Sparks, M. Handley, and E. Schooler, "SIP: Session Initiation Protocol", RFC 3261, June 2002;
A. Roach, "SIP-Specific Event Notification", RFC 3265, June 2002; and,
B. Campbell, Ed., J. Rosenberg, H. Schulzrinne, C. Huitema, D. Gurle, "Session Initiation Protocol (SIP) Extension for Instant Messaging", RFC 3428, December 2002.

A terminal operating in accordance with conventional HTTP is not designed to be able to receive services provided through SIP/SIMPLE.

However, demand is increasing for services of telephone conferencing, television telephoning, messaging, and transmission of presence information, all of which can be accomplished through SIP/SIMPLE.

### SUMMARY OF THE INVENTION

In view of the above-mentioned matters, it is an object of the preferred embodiments of the present invention to provide a network which allows a terminal operating in accordance with HTTP to receive services presented through SIP/SIMPLE, such as messaging and notification of presence information.

It is also an object of the preferred embodiments to provide a protocol-converter which allows a terminal operating in accordance with HTTP to receive services presented through SIP or SIMPLE.

It is a further object of the preferred embodiments to provide a method of allowing a HTTP-based terminal to receive SIP-based services.

It is a still further object of the preferred embodiments to provide a program for causing a computer to carry out a method of allowing a HTTP-based terminal to receive SIP-based services.

Hereinbelow are described a network, a protocol-converter, a method of allowing a HTTP-based terminal to receive SIP-based services, and a program for causing a computer to carry out a method of allowing a HTTP-based terminal to receive SIP-based services, all in accordance with the present invention through the use of reference numerals used in later-described embodiments. The reference numerals are indicated only for the purpose of clearly showing correspondence between the claims and the embodiments. It should be noted that the reference numerals are not intended to be used in interpreting the claims of the present invention.

In one aspect of the present invention, there is provided a network system for allowing a HTTP-based terminal (1) to receive SIP-based services, characterized by (a) a first module (3) storing therein presence information relating to a SIP-based terminal (5) and the HTTP-based terminal (1), (b) a second module (4) carrying out SIP-based services, and (c) a protocol-converter (2) which, on receipt of a request of carrying out SIP-based service from the HTTP-based terminal (1), transmits a result as to how the SIP-based service was carried out in the first and second modules (3, 4), to the HTTP-based terminal (1), and which, on receipt of a request of carrying out SIP-based service from the SIP-based terminal (5) making communication with the HTTP-based terminal (1), transmits a result as to how the SIP-based service was carried out in the first and second modules (3, 4), to the HTTP-based terminal (1), in response to a request of doing so, transmitted from the HTTP-based terminal (1).

For instance, the protocol-converter (2) may be designed to store therein data relating to the HTTP-based terminal (1), and results of how SIP-based services were carried out in the first and second modules (3, 4) in response to a request transmitted from the SIP-based terminal (5).

For instance, the protocol-converter (2) may be designed to revise a presence list stored in the first module (3) and including presence information relating to the SIP-based terminal (5), in response to a request from the HTTP-based terminal (1).

For instance, the protocol-converter (2) may be designed to carry out authentication to the second module (4) on receipt of a sign-in request transmitted from the HTTP-based terminal (1) for receiving SIP-based services.

In another aspect of the present invention, there is provided a protocol-converter (2) for allowing a HTTP-based terminal (1) to receive SIP-based services, characterized by (a) a first unit (21) which receives a request of carrying out SIP-based service from the HTTP-based terminal (1), and transmits a result as to how the SIP-based service was carried out, to the HTTP-based terminal (1), (b) a second unit (22) which transmits the request to a first external module (3) in dependence on a kind of the request, and receives a result as to how the SIP-based service was carried out in the first external module (3), (c) a third unit (23) which receives a request of carrying out SIP-based service from the HTTP-based terminal (1) and a SIP-based terminal (5), transmits the request to a second external module (4) in dependence on a kind of the request, and receives a result as to how the SIP-based service was carried out in the second external module (4), and (d) a fourth unit (24) which transmits the request to the second or third unit (22, 23) in dependence on a kind of the request, and transmits a result as to how the SIP-based service was carried out, to the second unit (22).

It is preferable that the protocol-converter (2) further includes a fifth unit (25) which stores therein data relating to the HTTP-based terminal (1), and results of how SIP-based services were carried out in the first and second external modules (3, 4) in response to a request transmitted from the SIP-based terminal (5).

It is preferable that the second unit (22), on receipt of a request of revising a presence list including presence information relating to the SIP-based terminal (5) from the HTTP-based terminal (1), requests the first external module (3) to revise the presence list, receives a result of revision from the first external module (3), and transmits the result to the HTTP-based terminal (1).

It is preferable that the third unit (23) carries out authentication to the second module (4) on receipt of a sign-in request transmitted from the HTTP-based terminal (1) for receiving SIP-based services.

In still another aspect of the present invention, there is provided a method of allowing a HTTP-based terminal (1) to receive SIP-based services, including (a) on receipt of a request of carrying out SIP-based service from the HTTP-based terminal (1), transmitting the request to a first module (3) storing therein presence information relating to a SIP-based terminal (5) and the HTTP-based terminal (1) and a second module (4) carrying out SIP-based services, (b) transmitting a result as to how the SIP-based service was carried out in the first and second modules (3, 4) to the HTTP-based terminal (1), (c) on receipt of a request of carrying out SIP-based service from the SIP-based terminal (5) making communication with the HTTP-based terminal (1), receiving a result as to how the SIP-based service was carried out in the first and second modules (3, 4), and (d) transmitting the result to the HTTP-based terminal (1) in response to a request of doing so, transmitted from the HTTP-based terminal (1).

It is preferable that the method further includes storing therein data relating to the HTTP-based terminal (1), and results of how SIP-based services were carried out in the first and second modules (3, 4) in response to a request transmitted from the SIP-based terminal (5).

It is preferable that the method further includes revising a presence list stored in the first module (3) and including presence information relating to the SIP-based terminal (5), in response to a request from the HTTP-based terminal (1).

It is preferable that the method further includes carrying out authentication to the second module (4) on receipt of a sign-in request transmitted from the HTTP-based terminal (1) for receiving SIP-based services.

In yet another aspect of the present invention, there is provided a program for causing a computer to carry out a method of allowing a HTTP-based terminal (1) to receive SIP-based services, wherein steps executed by the computer in accordance with the program includes (a) on receipt of a request of carrying out SIP-based service from the HTTP-based terminal (1), transmitting the request to a first module (3) storing therein presence information relating to a SIP-based terminal (5) and the HTTP-based terminal (1) and a second module (4) carrying out SIP-based services, (b) transmitting a result as to how the SIP-based service was carried out in the first and second modules (3, 4) to the HTTP-based terminal (1), (c) on receipt of a request of carrying out SIP-based service from the SIP-based terminal (5) making communication with the HTTP-based terminal (1), receiving a result as to how the SIP-based service was carried out in the first and second modules (3, 4), and (d) transmitting the result to the HTTP-based terminal (1) in response to a request of doing so, transmitted from the HTTP-based terminal (1).

It is preferable that the steps further include storing therein data relating to the HTTP-based terminal (1), and results of how SIP-based services were carried out in the first and second modules (3, 4) in response to a request transmitted from the SIP-based terminal (5).

It is preferable that the steps further include revising a presence list stored in the first module (3) and including presence information relating to the SIP-based terminal (5), in response to a request from the HTTP-based terminal (1).

It is preferable that the steps further include carrying out authentication to the second module (4) on receipt of a sign-in request transmitted from the HTTP-based terminal (1) for receiving SIP-based services.

The advantages obtained by the aforementioned present invention will be described hereinbelow.

In the present invention, the protocol-converter, on receipt of a request of carrying out SIP-based services from the HTTP-based terminal, transmits the request to the first and second modules. Then, the protocol-converter receives a result of how the SIP-based services were carried out, from the first and second modules, and transmits the result to the HTTP-based terminal. Further, the protocol-converter receives a result of how SIP-based services were carried out in the first and second modules in response to a request transmitted from the SIP-based terminal, and transmits the result to the HTTP-based terminal in response to a request of doing so, transmitted from the HTTP-based terminal. Thus, the HTTP-based terminal can make communication with or receive SIP-based services from the first and second modules both of which provide SIP-based services, through the protocol-converter. Accordingly, the SIP-based terminal and the HTTP-based terminal can exchange messages and/or presence information therebetween. This ensures that the HTTP-based terminal can receive services provided through SIP/SIMPLE such as messaging and notification of presence information.

Furthermore, the protocol-converter may be designed to store therein data relating to the HTTP-based terminal, and results of how SIP-based services were carried out in the first and second modules in response to a request transmitted from the SIP-based terminal, the results being received from the first and second modules. The protocol-converter may be designed to revise a presence list stored in the first module and including presence information relating to the SIP-based terminal, in response to a request from the HTTP-based terminal. The protocol-converter may be designed to carry out authentication to the second module on receipt of a sign-in request transmitted from the HTTP-based terminal for receiving SIP-based services. As a result, it would be no longer necessary for the HTTP-based terminal to carry out complex steps, ensuring that services can be provided to a HTTP-based browser or a terminal including a JAVA application. Furthermore, a user can receive services, such as messaging and notification of presence information provided through SIP/SIMPLE, through any one of the SIP-based terminal and the HTTP-based terminal. This ensures enhancement in quality of services presented to a user.

### BRIEF DESCRIPTION OF THE DRAWINGS

Preferred features of the present invention will now be described, by way of example only, with reference to the accompanying drawings, in which:-
FIG. 1 is a block diagram of a network system that includes a protocol-converter in accordance with an embodiment of the present invention.
FIG. 2 is a flowchart of steps to be carried out by the protocol-converter illustrated in FIG. 1.
FIG. 3 is a flowchart of steps to be carried out by the protocol-converter illustrated in FIG. 1.
FIG. 4 is a flowchart of steps to be carried out by the protocol-converter illustrated in FIG. 1.
FIG. 5 is a flow-chart showing steps to be carried out by the protocol-converter illustrated in FIG. 1.
FIG. 6 is a flow-chart showing steps to be carried out by the protocol-converter illustrated in FIG. 1.

### DESCRIPTION OF THE PREFERRED EMBODIMENTS

Preferred embodiments in accordance with the present invention will be explained hereinbelow with reference to drawings.

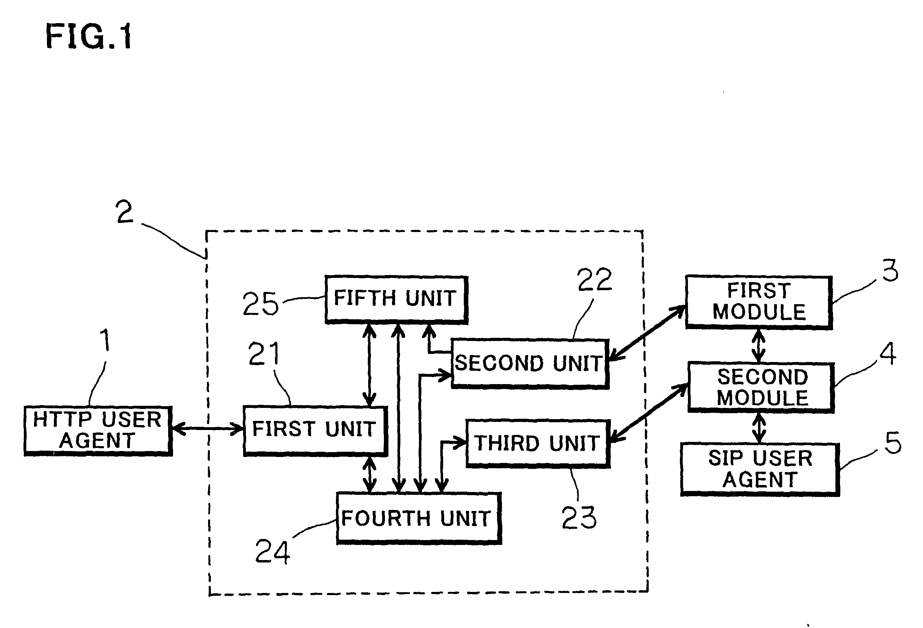

FIG. 1 is a block diagram of a network system including the protocol-converter in accordance with an embodiment of the present invention.

As illustrated in FIG. 1, the network system is comprised of a HTTP user agent 1 comprised of a user terminal operating in accordance with HTTP, a protocol-converter 2 which converts HTTP to SIP and SIP to HTTP, a first module 3 which stores and administers presence information defined in accordance with SIP, a second module 4 which carries out steps or services defined in accordance with SIP, and a SIP user agent 5 comprised of a user terminal designed to be able to receive services provided through SIP or a device to which an application software is installed.

The HTTP user agent 1 and the protocol-converter 2 make communication with each other through a network such as Internet. Similarly, the protocol-converter 2 makes communication with the first module 3 and the second module 4 through a network such as Internet. The first and second modules 3 and 4 make communication with each other through a network such as Internet. The second module 4 and the SIP user agent make communication with each other through a network such as Internet.

When the HTTP user agent 1 receives services defined in accordance with SIP, the HTTP user agent 1 transmits SIP URI (SIP Uniform Resource Identifier) used as an address for identifying the HTTP user agent 1 itself and a device (or a user) with which the HTTP user agent 1 is going to make communication, a request of carrying out services defined in accordance with SIP, and parameters required for carrying out such services, to the protocol-converter 2.

The first module 3 stores presence information of each user and a presence list, and transmits them to the protocol-converter 2 and the SIP user agent 5 on receipt of a request of transmitting them from the protocol-converter 2 and the SIP user agent 5.

The second module 4 carries out SIP-based services indicated with SIP messages transmitted from the SIP user agent 5, the protocol-converter 2 and the first module 3.

The protocol-converter 2 is comprised of a first unit 21, a second unit 22, a third unit 23, a fourth unit 24 and a fifth unit 25.

The fifth unit 25 is comprised of a memory storing data of each of the HTTP user agents 1. For instance, the fifth unit 25 stores SIP URI, presence information, presence list information, and messages in association with each of the HTTP user agents 1.

The first unit 21 identifies a kind of a request transmitted from the HTTP user agent 1, and transmits information of the HTTP user agent 1, stored in the fifth unit 25, back to the HTTP user agent 1, or transfers the request to the fourth unit 24 in accordance with the identified kind of the request.

The fourth unit 24 transfers the received request to the second unit 22 or the third unit 23 in accordance with a kind of the received request. For instance, on receipt of a request from the first unit 21, the fourth unit 24 identifies a kind of the received request, and transfers the received request to the third unit 23 or the second unit 22 in accordance with the kind of the received request, and further, transmits a result of how the request was dealt with to the first unit 21, and causes the fifth unit 25 to store the result therein. On receipt of a request from the third unit 23, the fourth unit 24 receives requisite information from the fifth unit 25, and stores a result of how the request was dealt with into the fifth unit 25.

The third unit 23, on receipt of a SIP message from the first module 3 or the SIP user agent 5, identifies a SIP method indicated with the received SIP message, and stores the identified SIP method into the fifth unit 25 through the fourth unit 24, if necessary. On receipt of a request of carrying out services from the fourth unit 24, the third unit 23 carries out SIP processes such as transmission of a message or updating presence information, in accordance with a kind of the received request.

The second unit 22 makes communication with the first module 3 in accordance with a request transferred from the fourth unit 24, and revises a presence list or read a presence list out of the first module 3. Furthermore, the second unit 22 stores presence information read out of the first module 3, and a result of how the request was dealt with in the second module 4, into the fifth unit 25.

Though only one HTTP user agent 1, first module 3, second module 4 and SIP user agent 5 are illustrated in FIG. 1, a plurality of HTTP user agents 1, first modules 3, second modules 4 and SIP user agents 5 may be connected to the protocol-converter 2 through a network.

Each of the first and second modules 3 and 4 is comprised of a data processor such as a workstation or a server computer, for instance. Each of the first and second modules 3 and 4 is comprised of a processor including a central processing unit (CPU) executing certain steps in accordance with a program and a memory storing data necessary for CPU to execute steps, a recording medium storing a program in accordance with which CPU operates, an input interface through which a command and/or data is input into CPU, an output interface through which a result of steps having been executed by CPU is output, and a communication controller through which the first and second modules 3 and 4 make communication with external devices through a network.

The HTTP user agent 1 is comprised of a processor carrying out requisite steps in accordance with a program, an input interface through which a command and/or data is input into the processor, and a display in which a result of steps having been executed by the processor is displayed, for instance.

The protocol-converter 2 may be designed to be comprised of LSI which accomplishes the functions of the first to fifth units 21 to 25.

As an alternative, similarly to the first and second modules 3 and 4, the protocol-converter 2 may be comprised of a data processor. For instance, the protocol-converter 2 may be comprised of a central processing unit, a first memory 24, a second memory, an input interface through which a command and/or data is input into the central processing unit, and an output interface through which a result of steps having been executed by the central processing unit is output. Each of the first and second memories is comprised of a semiconductor memory such as a read only memory (ROM), a random access memory (RAM) or an IC memory card, or a storage device such as a flexible disc, a hard disc or an optic magnetic disc, for instance. The first memory stores therein a program for operating the central processing unit. The second memory stores therein various data and parameters. The central processing unit reads the program out of the first memory, and executes the program. Thus, the central processing unit operates in accordance with the program stored in the first memory.

For instance, the protocol-converter 2, the first module 3 and the second module 4 are administrated by a communication company administrating a network, a service provider such as ISP (Internet Service Provider) or a third party entrusted by such a company or provider to operate the protocol-converter 2, the first module 3 and the second module 4.

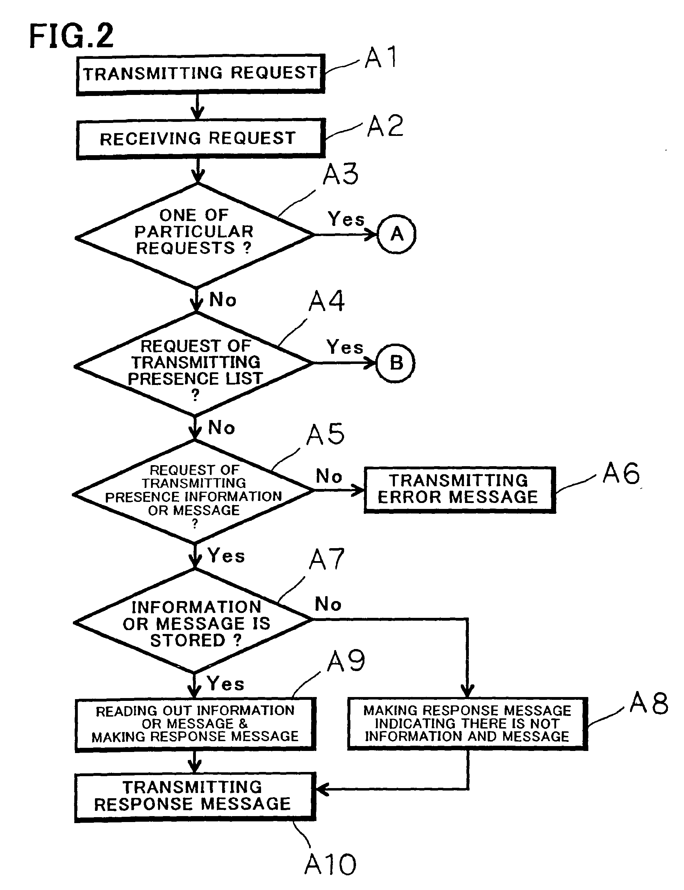

FIGs. 2 to 6 are flow-charts showing steps carried out by the protocol-converter 2. An operation of the protocol-converter 2 is explained hereinbelow with reference to FIGs. 2 to 6.

With reference to FIG. 2, when the HTTP user agent 1 signs in SIP network, the HTTP user agent 1 transmits a request of sign-in to the first unit 21 of the protocol-converter 2, in step A1. Herein, SIP network indicates a SIP-based network including SIP servers such as the first and second modules 3 and 4, and "sign in" means recording data about the HTTP user agent 1 into SIP server for receiving SIP-based services.

On receipt of a request from the HTTP user agent 1 (step A2), the first unit 21 judges whether the received request is a sign-in request, a sign-out request, a request of updating presence information, a request of revising a presence list, or a request of transmitting a message, in step A3. Herein, "sign out" means deleting data about the HTTP user agent 1, stored in SIP server for not receiving SIP-based services. Since a request transmitted from the HTTP user agent 1 to the first unit 21 is a sign-in request, the first unit 21 transfers the sign-in request to the fourth unit 24 (Yes in step A3).

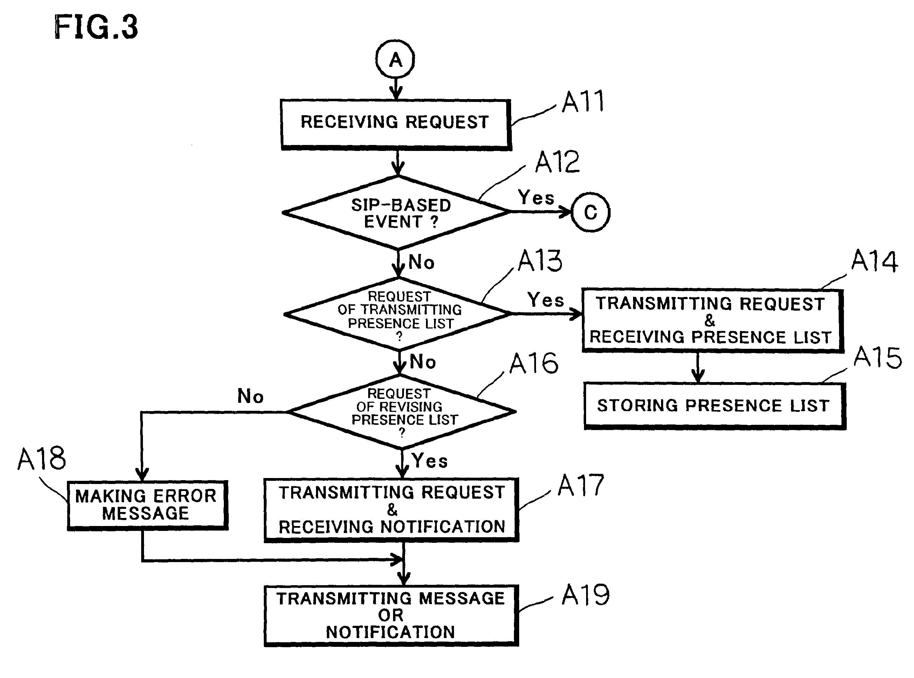

With reference to FIG. 3, on receipt of the sign-in request from the first unit 21 (step A11), the fourth unit 24 judges whether the received request is an event to be dealt with in the third unit 23 (hereinafter, such an even is referred to as "SIP-based event"), in step A12. Since a sign-in request is an SIP-based event (Yes in step A12), the fourth unit 24 transfers the sign-in request to the third unit 23.

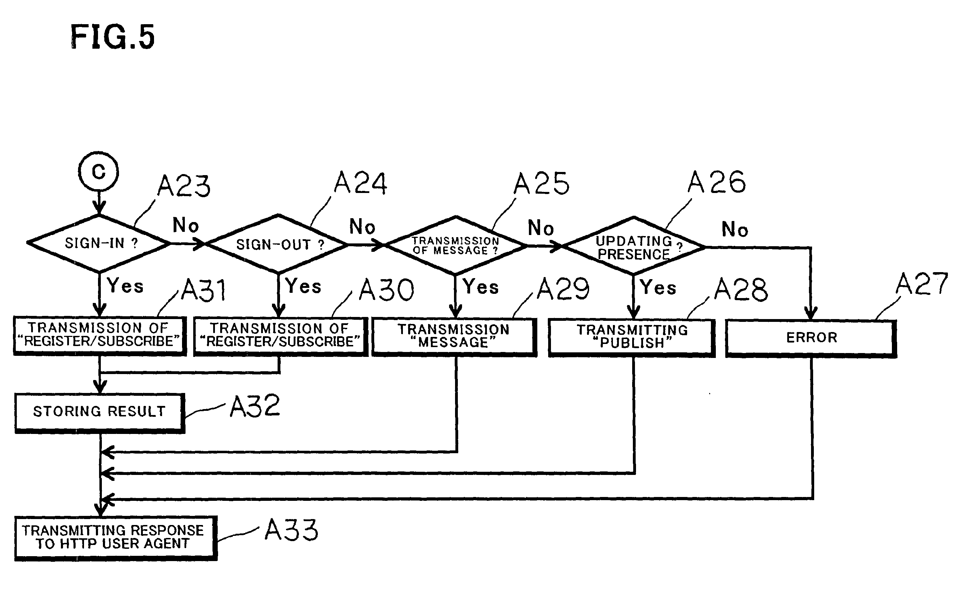

With reference to FIG. 5, on receipt of a request from the fourth unit 24, the third unit 23 judges whether the received request is a sign-in request, a sign-out request, a request of updating presence information, or a request of transmitting a message, in steps A23 to A26.

If the received request is not a sign-in request, a sign-out request, a request of updating presence information, and a request of transmitting a message (No in steps A23 to A26), the third unit 23 makes a response message indicative of an error (step A27), and then, transmits the response message to the HTTP user agent 1 through the fourth and first units 24 and 21.

Since the received request is a sign-in request (Yes in step A23), the third unit 23 transmits a REGISTER method to the second module 4, and further transmits a SUBSCRIBE method to the first module 3 through the second module 4, in step A31.

When required from the second module 4 to carry out authentication in response to the transmission of a REGISTER method, the third unit 23 carries out authentication on behalf of the HTTP user agent 1.

On receipt of a "200 OK" signal from the second module 4, the third unit 23 stores the fact that the HTTP user agent 1 which transmitted a signal-in request is now in a sign-in condition, to the fifth unit 25 through the fourth unit 24, in step A32. Furthermore, the third unit 23 transmits a result of steps having been carried out in response to the sign-in request, to the HTTP user agent 1 through the fourth and first units 24 and 21, in step A33.

When the third unit 23 receives a "200 OK" signal from the first module 3 as a response to the transmission of a SUBSCRIBE method, the third unit 23 finishes its operation.

With reference back to FIG. 2, when the HTTP user agent 1 updates presence information, the HTTP user agent 1 transmits a request of updating presence information to the first unit 21 of the protocol-converter 2, in step A1.

On receipt of a request from the HTTP user agent 1 (step A2), the first unit 21 judges whether the received request is a sign-in request, a sign-out request, a request of updating presence information, a request of revising a presence list, or a request of transmitting a message, in step A3. Since a request transmitted from the HTTP user agent 1 to the first unit 21 is a request of updating presence information, the first unit 21 transfers the request to the fourth unit 24 (Yes in step A3).

With reference to FIG. 3, on receipt of the request of updating presence information, from the first unit 21 (step A11), the fourth unit 24 judges whether the received request is an SIP-based event to be dealt with in the third unit 23, in step A12. Since a request of updating presence information is an SIP-based event (Yes in step A12), the fourth unit 24 transfers the request to the third unit 23.

With reference to FIG. 5, on receipt of a request from the fourth unit 24, the third unit 23 judges whether the received request is a sign-in request, a sign-out request, a request of updating presence information, or a request of transmitting a message, in steps A23 to A26.

If the received request is not a sign-in request, a sign-out request, a request of updating presence information, and a request of transmitting a message (No in steps A23 to A26), the third unit 23 makes a response message indicative of an error (step A27), and then, transmits the response message to the HTTP user agent 1 through the fourth and first units 24 and 21.

Since the received request is a request of updating presence information (Yes in step A26), the third unit 23 transmits a PUBLISH method to the first module 3 through the second module 4, in step A28.

On receipt of a "200 OK" signal from the second module 4 through the first module 3, the third unit 23 transmits a message indicative of completion of updating presence information, to the HTTP user agent 1 through the fourth and first units 24 and 21, in step A33.

With reference back to FIG. 2, when the HTTP user agent 1 would like to receive a presence list, the HTTP user agent 1 transmits a request of transmitting a presence list to the HTTP user agent 1, to the first unit 21 of the protocol-converter 2, in step A1.

On receipt of a request from the HTTP user agent 1 (step A2), the first unit 21 judges whether the received request is a sign-in request, a sign-out request, a request of updating presence information, a request of revising a presence list, or a request of transmitting a message, in step A3. A request transmitted from the HTTP user agent 1 to the first unit 21 is a request of transmitting a presence list to the HTTP user agent 1, and hence, the request is not any one of the above-mentioned requests (No in step A3).

Then, the first unit 21 judges whether the received request is a request of transmitting a presence list to the HTTP user agent 1, in step A4.

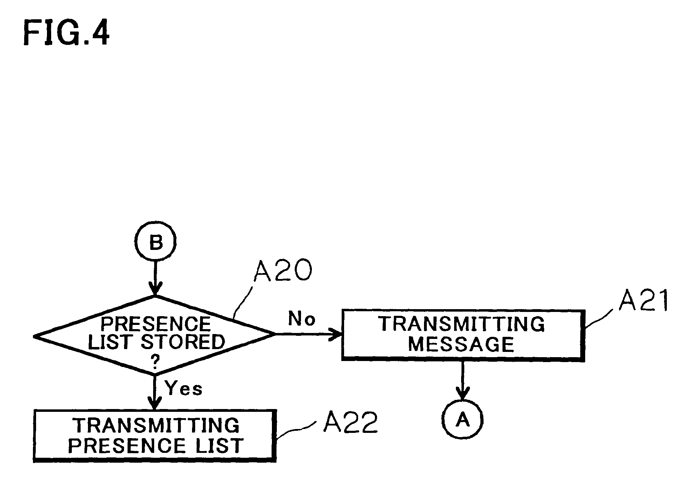

Since the received request is a request of transmitting a presence list to the HTTP user agent 1 (Yes in step A4), with reference to FIG. 4, the first unit 21 judges whether a presence list of the HTTP user agent 1 having transmitted the request is stored in the fifth unit 25, in step A20.

If the presence list is stored in the fifth unit 25 (Yes in step A20), the first unit 21 reads the presence list out of the fifth unit 25, and transmits the read-out presence list to the HTTP user agent 1, in step A22.

If the presence list is not stored in the fifth unit 25 (No in step A20), the first unit 21 transmits a message indicating that there is not the presence list, to the HTTP user agent 1 in step A21, and then, transmits the request of transmitting a presence list to the HTTP user agent 1, to the fourth unit 24.

With reference to FIG. 3, on receipt of the request of transmitting a presence list to the HTTP user agent 1, from the first unit 21 (step A11), the fourth unit 24 judges whether the received request is an SIP-based event, in step A12. Since a request of transmitting a presence list to the HTTP user agent 1 is not an SIP-based event (No in step A12), the fourth unit 24 transfers the request to the second unit 22.

The second unit 22 judges whether the received request is a request of transmitting a presence list to the HTTP user agent 1, in step A13. Since the received request is a request of transmitting a presence list to the HTTP user agent 1, the second unit 22 transmits the request to the first module 3, and receives a presence list from the first module 3 as a response, in step A14.

On receipt of the presence list from the first module 3, the second unit 22 stores the received presence list in the fifth unit 25, in step A15.

The HTTP user agent 1 repeatedly transmits a request of transmitting a presence list thereto, until the HTTP user agent 1 receives a present list.

With reference back to FIG. 2, when the HTTP user agent 1 transmits a message, for instance, to the SIP user agent 5, the HTTP user agent 1 transmits a request of transmission of a message to the first unit 21 of the protocol-converter 2, in step A1.

On receipt of a request from the HTTP user agent 1 (step A2), the first unit 21 judges whether the received request is a sign-in request, a sign-out request, a request of updating presence information, a request of revising a presence list, or a request of transmitting a message, in step A3. Since a request transmitted from the HTTP user agent 1 to the first unit 21 is a request of transmitting a message, the first unit 21 transfers the request to the fourth unit 24 (Yes in step A3).

With reference to FIG. 3, on receipt of the request from the first unit 21 (step A11), the fourth unit 24 judges whether the received request is an SIP-based event to be dealt with in the third unit 23, in step A12. Since a request of transmitting a message is an SIP-based event (Yes in step A12), the fourth unit 24 transfers the request to the third unit 23.

With reference to FIG. 5, on receipt of a request from the fourth unit 24, the third unit 23 judges whether the received request is a sign-in request, a sign-out request, a request of updating presence information, or a request of transmitting a message, in steps A23 to A26.

Since the received request is a request of transmitting a message (Yes in step A25), the third unit 23 transmits the message received from the HTTP user agent 1, to the second module 4, in step A29.

On receipt of a "200 OK" signal from the second module 4, the third unit 23 transmits a response indicating that the HTTP user agent 1 is allowed to transmit a message, to the HTTP user agent 1 through the fourth and first units 24 and 21, in step A33.

With reference back to FIG. 2, when the HTTP user agent 1 would like to receive presence information of a body listed in a presence list, the HTTP user agent 1 transmits a request of transmitting presence information to the HTTP user agent 1, to the first unit 21 of the protocol-converter 2, in step A1. Herein, a body means a person with which a user makes communication, and which is administrated by a user.

On receipt of a request from the HTTP user agent 1 (step A2), the first unit 21 judges whether the received request is a sign-in request, a sign-out request, a request of updating presence information, a request of revising a presence list, or a request of transmitting a message, in step A3. A request transmitted from the HTTP user agent 1 to the first unit 21 is a request of transmitting presence information to the HTTP user agent 1, and hence, the request is not any one of the above-mentioned requests (No in step A3).

Then, the first unit 21 judges whether the received request is a request of transmitting a presence list to the HTTP user agent 1, in step A4.

Since the received request is not a request of transmitting a presence list to the HTTP user agent 1 (No in step A4), the first unit 21 judges whether the received request is a request of transmitting presence information to the HTTP user agent 1 or transmitting a message to the HTTP user agent 1, in step A5. If the received request is neither a request of transmitting presence information to the HTTP user agent 1 nor transmitting a message to the HTTP user agent 1 (No in step A5), the first unit 21 transmits an error message to the HTTP user agent 1, in step A6.

Since the received request is a request of transmitting presence information to the HTTP user agent 1 (Yes in step A5), the first unit 21 checks whether presence information of a body indicated by the HTTP user agent 1 is stored in the fifth unit 25, in step A7.

If the presence information of a body indicated by the HTTP user agent 1 is stored in the fifth unit 25 (Yes in step A7), the first unit 21 reads the presence information out of the fifth unit 25, and makes a response message including the thus read-out presence information, in step A9. Then, the first unit 21 transmits the response message to the HTTP user agent 1, in step A10.

If the presence information of a body indicated by the HTTP user agent 1 is not stored in the fifth unit 25 (No in step A7), the first unit 21 makes a response message indicating that there is not the presence information of a body indicated by the HTTP user agent 1, in step A8. Then, the first unit 21 transmits the response message to the HTTP user agent 1, in step A10.

With reference back to FIG. 2, when the HTTP user agent 1 would like to receive a message transmitted from the SIP user agent 5, the HTTP user agent 1 transmits a request of transmitting a message received from the SIP user agent 5 to the HTTP user agent 1, to the first unit 21 of the protocol-converter 2, in step A1.

On receipt of a request from the HTTP user agent 1 (step A2), the first unit 21 judges whether the received request is a sign-in request, a sign-out request, a request of updating presence information, a request of revising a presence list, or a request of transmitting a message, in step A3. A request transmitted from the HTTP user agent 1 to the first unit 21 is a request of transmitting a message received from the SIP user agent 5 to the HTTP user agent 1, and hence, the request is not any one of the above-mentioned requests (No in step A3).

Then, the first unit 21 judges whether the received request is a request of transmitting a presence list to the HTTP user agent 1, in step A4.

Since the received request is not a request of transmitting a presence list to the HTTP user agent 1 (No in step A4), the first unit 21 judges whether the received request is a request of transmitting presence information to the HTTP user agent 1 or transmitting a message to the HTTP user agent 1, in step A5. If the received request is neither a request of transmitting presence information to the HTTP user agent 1 nor transmitting a message to the HTTP user agent 1 (No in step A5), the first unit 21 transmits an error message to the HTTP user agent 1, in step A6.

Since the received request is a request of transmitting a message to the HTTP user agent 1 (Yes in step A5), the first unit 21 checks whether a message addressed to the HTTP user agent 1 is stored in the fifth unit 25, in step A7.

If a message addressed to the HTTP user agent 1 is stored in the fifth unit 25 (Yes in step A7), the first unit 21 reads the message out of the fifth unit 25, and makes a response message including the thus read-out message, in step A9. Then, the first unit 21 transmits the response message to the HTTP user agent 1, in step A10.

If the message addressed to the HTTP user agent 1 is not stored in the fifth unit 25 (No in step A7), the first unit 21 makes a response message indicating that there is not a message addressed to the HTTP user agent 1, in step A8. Then, the first unit 21 transmits the response message to the HTTP user agent 1, in step A10.

With reference back to FIG. 2, when the HTTP user agent 1 would like to revise information such as a nickname or a group name of a body listed in a presence list used by the HTTP user agent 1, the HTTP user agent 1 transmits a request of revising a presence list to the first unit 21 of the protocol-converter 2 together with information indicative of how the presence list is revised, in step A1. Herein, the above-mentioned nickname indicates a nickname which a user gives to a body, and the above-mentioned group name indicates a name which a user gives to each of groups when a user administrates bodies by grouping them into a plurality of groups.

On receipt of a request from the HTTP user agent 1 (step A2), the first unit 21 judges whether the received request is a sign-in request, a sign-out request, a request of updating presence information, a request of revising a presence list, or a request of transmitting a message, in step A3. Since a request transmitted from the HTTP user agent 1 to the first unit 21 is a request of revising a presence list, the first unit 21 transfers the request to the fourth unit 24 (Yes in step A3).

With reference to FIG. 3, on receipt of the request from the first unit 21 (step A11), the fourth unit 24 judges whether the received request is an SIP-based event, in step A12. Since the received request of revising a presence list is not an SIP-based event (No in step A12), the fourth unit 24 transfers the request to the second unit 22.

The second unit 22 judges whether the received request is a request of transmitting a presence list, in step A13.

Since the received request is not a request of transmitting a presence list (No in step A13), the second unit 22 further judges whether the received request is a request of revising a presence list, in step A16.

If the received request is not a request of revising a presence list (No in step A16), the second unit 22 makes a response message indicative of an error, in step A18, and then, transmits the response message to the HTTP user agent 1 through the first unit 21, in step A19.

Since the received request is a request of revising a presence list (Yes in step A16), the second unit 22 transmits the request of revising a presence list and the information indicative of how the presence list is revised to the first module 3, in step A17. Then, the second unit 22 receives notification of completion of revising the presence list from the first module 3.

On receipt of the notification from the first module 3, the second unit 22 transmits the notification to the HTTP user agent 1 through the fourth and first units 24 and 21, in step A19.

With reference to FIG. 2, when the HTTP user agent 1 signs out of SIP network, the HTTP user agent 1 transmits a request of sign-out to the first unit 21 of the protocol-converter 2, in step A1.

On receipt of a request from the HTTP user agent 1 (step A2), the first unit 21 judges whether the received request is a sign-in request, a sign-out request, a request of updating presence information, a request of revising a presence list, or a request of transmitting a message, in step A3. Since a request transmitted from the HTTP user agent 1 to the first unit 21 is a sign-out request, the first unit 21 transfers the sign-out request to the fourth unit 24 (Yes in step A3).

With reference to FIG. 3, on receipt of the sign-out request from the first unit 21 (step A11), the fourth unit 24 judges whether the received request is an SIP-based event, in step A12. Since a sign-out request is an SIP-based event (Yes in step A12), the fourth unit 24 transfers the sign-out request to the third unit 23.

With reference to FIG. 5, on receipt of a request from the fourth unit 24, the third unit 23 judges whether the received request is a sign-in request, a sign-out request, a request of updating presence information, or a request of transmitting a message, in steps A23 to A26.

Since the received request is a sign-out request (Yes in step A24), the third unit 23 transmits a SUBSCRIBE method to the first module 3 through the second module 4 to turn off a SUBSCRIBE condition, in step A30.

After having received a "200 OK" signal, the third unit 23 transmits a REGISTER method as a sign-out request to the fifth unit 25 to turn off a condition of the HTTP user agent 1 in the fifth unit 25. Then, the third unit 23 transmits a result of steps having been carried out in response to the sign-out request, to the HTTP user agent 1 through the fourth and first units 24 and 21, in step A33.

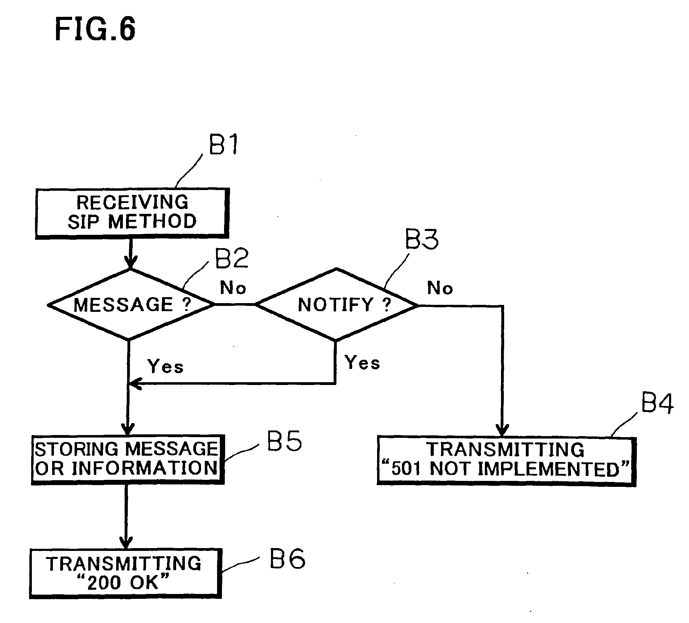

With reference to FIG. 6, on receipt of a SIP method transmitted from, for instance, a SIP server (step B1), the protocol-converter 2 judges whether the received SIP method is a MESSAGE method, in step B2.

If the received SIP method is not a MESSAGE method (No in step B2), the protocol-converter 2 further judges whether the received SIP method is a NOTIFY method, in step B3.

If the received SIP method is a MESSAGE method (Yes in step B2), the third unit 23 stores the message in the fifth unit 25, in step B5. Then, the third unit 23 transmits a "200 OK" signal to the second module 4, in step B6. Thus, the third unit 23 finishes its operation.

If the received SIP method is a NOTIFY method (Yes in step B3), the third unit 23 stores presence information about the SIP user agent 5 into the fifth unit 25, in step B5. Then, the third unit 23 transmits a "200 OK" signal to the second module 4, in step B6. Thus, the third unit 23 finishes its operation.

If the third unit 23 receives a SIP method not supported by the protocol-converter 2, specifically, if the received SIP method is neither a MESSAGE method nor a NOTIFY method (No in step B3), the third unit 23 transmits a "501 Not Implemented" signal to the second module 4, in step B4. Thus, the third unit 23 finishes its operation.

As having been explained above, the protocol-converter 2 in accordance with the present invention makes it possible for the HTTP user agent 1 to make communication with the first and second modules 3 and 4 both of which provide SIP-based services, through the protocol-converter 2. Thus, the HTTP user agent 1 can transmit a message and/or presence information to and receive the same from the SIP user agent 5. This means that the HTTP user agent 1 can receive SIP/SIMPLE-based services.

In the protocol-converter 2 in accordance with the present invention, various information relating to the HTTP user agent 1 and a result of how a request transmitted from the SIP user agent 5 was dealt with in the first and second modules 3 and 4 are stored in the fifth unit 25. Hence, it would be possible for the HTTP user agent 1 to receive SIP-based service of transmitting and receiving messages at real-time. Furthermore, the protocol-converter 2 revises a presence list on behalf of the HTTP user agent 1, ensuring access routes from the HTTP user agent 1 to the first and second modules 3 and 4 can be reduced. Accordingly, a user can receive qualified service.

Hereinbelow are explained detailed examples of protocol conversion carried out by the protocol-converter 2.

### (First Example)

First, an example of converting HTTP into SIP is explained. It is assumed that the HTTP user agent 1 transmits a request of sign-in to a SIP network.

When the HTTP user agent 1 signs in a SIP network, the HTTP user agent 1 transmits such a character sequence as mentioned below to the protocol-converter 2 in accordance with a POST method.

FNC=0256&TID=Java+appli&ver=1%2e0&ACN=*****%40b01%2enec%2ejp &pAS=####&PID=*****%40b01%2enec%2eco%2ejp

This character sequence includes the following parameters.
FNC: process ID (ID indicative of a kind of a process)
TID: a kind of a terminal
VER: version of a terminal
ACN: account
PAS: password
PID: public ID

These parameters are used when a request of sign-in is processed in accordance with SIP.

On receipt of the above-mentioned character sequence, the protocol-converter 2 identifies a kind of a request transmitted from the HTTP user agent 1 through the use of a process ID (FNC). Furthermore, the protocol-converter 2 transmits a sign-in request to the second module 4. Specifically, the protocol-converter 2 transmits such a character sequence as mentioned below, for instance, to the second module 4 through the use of parameters received from the HTTP user agent 1. These parameters are used for authentication of the HTTP user agent 1 which transmitted a sign-in request.
REGISTER sip: sip.nec.co.jp: 5060 SIP/2.0
Via: SIP/2.0/UDP
gw.nec.co.jp: 5060; branch=z9hG4bKb43bc76ebf39f5b6def68b995a9a95ce
Max-Forwards: 70
From: < sip:*****@b01.nec.co.jp >; tag=7b8f
To: < sip:*****@b01.nec.co.jp >
Call-ID= 0628903110566050390000
Authorization: Digest username=*****@b01.nec.co.jp, realm="b01.nec.co.jp", nonce='''', uri=" sip:*****.sip.nec.co.jp", response=""
CSeq: 1 REGISTER
Contact: < sip:*****@fnscs.nec.co.jp: 5060 >
Expires: 600000
Content-Length: 0

When the sign-in process is completed, the protocol-converter 2 transmits a result of the sign-in process to the HTTP user agent 1 through the use of the following codes.
0257: process ID
0200: response code for notifying a positive result (OK)
0000031631: session ID used for making communication with the protocol-converter 2

### (Second Example)

For instance, when presence information is updated in accordance with a request transmitted from the SIP user agent 5, a following character sequence is transmitted to the protocol-converter 2 through the first module 3.
NOTIFY sip: *****@gw.nec.co.jp: 5060 SIP/2.0
Via: IP/2.0/UDP
sip.nec.co.jp: 5060; branch=z9hG4bKca9a0643b70424b678e37231d4d90c45
From: <sip:*****@b01.nec.co.jp>; tag=00005daf000672be
To: < sip:*****@b01.nec.co.jp >; tag=575f
Call-ID: 1009835110571430592456
CSeq: 12 NOTIFY
Max-Forwards: 8
Contact:
Subscription-State: active; expires=7200
Event: presencelist
Contact-Type: application/cpim-pidf+xml
Content-Length: 50
< ?xml version="1.0" encoding="UTF-8"?>
< presence xmlns="urn: ietf; params: xml: ns; cpim-pidf"
   xmlns: im="urn: ietf: params: xml: ns:cpim-pidf:im"
   xmlns: necex=http://www.nec.co.jp/cpim-presenc/
   entry="pres:$$$$$@b01.nec.co.jp">
< tuple id="1" >
< status >
< basic > open < /basic >
< im > berightback < /im >
<necex: location xml: lang="ja" > sibuya </necex: location>
< /status >
< note xml: lang="ja" > Sorry < /note >
< /tuple >
< /presence >

On receipt of a notification of updating presence information, the protocol-converter 2 judges which user the notification is addressed to, and stores the received presence information in the fifth unit 25.

Assuming that the HTTP user agent 1 transmits a request of transmitting presence information thereto to the protocol-converter 2, the first unit 21 of the protocol-converter 2 retrieves the fifth unit 25 to check whether associated presence information is stored. If the associated presence information is stored in the fifth unit 25, the first unit 21 reads the presence information out of the fifth unit 25, and then, transmits the read-out presence information to the HTTP user agent 1.

When the HTTP user agent 1 transmits a request of transmitting presence information to the HTTP user agent 1, to the protocol-converter 2, the HTTP user agent 1 transmits such a character sequence as mentioned below to the protocol-converter 2.
FNC=1024&SID=000003163&TID=Java+appli&VER=1%2e0&PID=*****% 40b01%2enec%2eco%2ejp

This character sequence includes the following parameters.
FNC: process ID (ID indicative of a kind of a process)
SID: a kind of a terminal
VER: version of a terminal
PID: public ID

The protocol-converter 2 transmits the following response codes to the HTTP user agent 1.
1025: process ID
0200: response code

The HTTP user agent 1 receives presence information of a user indicated by the HTTP user agent 1, in the form of such a character sequence as indicated below.
0, $$$$$%40b01.nec.co.jp, open, berightback, ja, sibuya, ja, Sorry

In the above-indicated character sequence, "sibuya" is location information, and "Sorry" is a message to a user with which the HTTP user agent 1 makes communication.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

A network system for allowing a HTTP-based terminal to receive SIP-based services includes: (a) a first module for storing therein presence information relating to a SIP-based terminal and the HTTP-based terminal; (b) a second module for carrying out SIP-based services; and, (c) a protocol-converter which, on receipt of a request from the HTTP-based terminal to carry out SIP-based services, transmits a result to the HTTP-based terminal as to how the SIP-based services were carried out in the first and second modules, and which, on receipt of a request to carry out SIP-based services from the SIP-based terminal in communication with the HTTP-based terminal, transmits to the HTTP-based terminal, in response to a request to do so from the HTTP-based terminal, a result as to how the SIP-based service was carried out in the first and second modules.

## Claims

1. A network system for allowing a HTTP-based terminal (1) to receive SIP-based services, the system being **characterized by** comprising:
(a) a first module (3) for storing therein presence information relating to a SIP-based terminal (5) and the HTTP-based terminal (1);
(b) a second module (4) for carrying out the SIP-based services; and,
(c) a protocol-converter (2) which:
after receiving, from the HTTP-based terminal (1), a request to carry out the SIP-based services, transmits to the HTTP-based terminal (1), in response to a request from HTTP-based terminal (1), results as to how the SIP-based services were carried out in the first and second modules (3,4); and,
after receiving, from the SIP-based terminal (5) in communication with the HTTP-based terminal (1), a request to carry out the SIP-based services, transmits to the HTTP-based terminal (1), in response to a request from HTTP-based terminal (1), results as to how the SIP-based services were carried out in the first and second modules (3, 4).

2. The network system as set forth in claim 1, wherein the protocol-converter (2) stores therein data relating to the HTTP-based terminal (1), and stores results of how, in response to a request transmitted from the SIP-based terminal (5), SIP-based services were carried out in the first and second modules (3, 4).

3. The network system as set forth in claim 1, wherein the protocol-converter (2) revises, in response to a request from the HTTP-based terminal (1), a presence list which is stored in the first module (3) and which includes presence information relating to the SIP-based terminal (5).

4. The network system as set forth in claim 1, 2 or 3, wherein the protocol-converter (2) carries out authentication to the second module (4) on receipt of a sign-in request, transmitted from the HTTP-based terminal (1), for receiving SIP-based services.

5. A protocol-converter (2) for allowing a HTTP-based terminal (1) to receive SIP-based services, the protocol-converter being **characterized by** comprising:
(a) a first unit (21) for:
receiving a request for carrying out SIP-based services from the HTTP-based terminal (1); and,
transmitting to the HTTP-based terminal (1) a result as to how the SIP-based services were carried out;
(b) a second unit (22) for:
transmitting, depending on the type of the request, the request to a first external module (3); and,
receiving a result as to how the SIP-based services were carried out in the first external module (3);
(c) a third unit (23) for:
receiving a request for carrying out SIP-based services from the HTTP-based terminal (1) and a SIP-based terminal (5);
transmitting, depending on the type of the request, the request to a second external module (4); and,
receiving a result as to how the SIP-based services were carried out in the second external module (4); and,
(d) a fourth unit (24) for:
transmitting, depending on the type of the request, the request to the second or third unit (22, 23); and,
transmitting, to the first unit (21), a result as to how the SIP-based services were carried out.

6. The protocol-converter (2) as set forth in claim 5, further comprising a fifth unit (25) which stores therein:
data relating to the HTTP-based terminal (1); and,
results of how, in response to a request transmitted from the SIP-based terminal (5), SIP-based services were carried out in the first and second external modules (3, 4).

7. The protocol-converter (2) as set forth in claim 5, wherein, on receipt of a request from the HTTP-based terminal (1) for revising a presence list, including presence information relating to the SIP-based terminal (5), the second unit (22):
requests the first external module (3) to revise the presence list;
receives a result of revision from the first external module (3); and,
transmits the result to the HTTP-based terminal (1).

8. The protocol-converter (2) as set forth in claim 5, 6 or 7, wherein the third unit carries out authentication to the second module (4) on receipt of a sign-in request, transmitted from the HTTP-based terminal (1), for receiving SIP-based services.

9. A method to allow a HTTP-based terminal (1) to receive SIP-based services, the method including the steps of:
(a) on receipt of a request from the HTTP-based terminal (1) for carrying out SIP-based services, transmitting the request to:
a first module (3) storing therein presence information relating to a SIP-based terminal (5) and the HTTP-based terminal (1); and,
a second module (4) carrying out SIP-based services;
(b) transmitting a result to the HTTP-based terminal (1) as to how the SIP-based services were carried out in the first and second modules (3, 4);
(c) on receiving a request, from the SIP-based terminal (5) in communication with the HTTP-based terminal (1), to carry out SIP-based services, receiving a result as to how the SIP-based services were carried out in the first and second modules (3, 4); and,
(d) transmitting the result to the HTTP-based terminal (1) in response to a request to do so from the HTTP-based terminal (1).

10. The method as set forth in claim 9, further including the step of storing data relating to the HTTP-based terminal (1) and results of how, in response to a request transmitted from the SIP-based terminal (5), SIP-based services were carried out in the first and second modules (3, 4).

11. The method as set forth in claim 9, further including the step of revising, in response to a request from the HTTP-based terminal (1), a presence list stored in the first module (3) and including presence information relating to the SIP-based terminal (5).

12. The method as set forth in claim 9, 10 or 11, further including the step of carrying out authentication to the second module (4) on receipt of a sign-in request, transmitted from the HTTP-based terminal (1), for receiving SIP-based services.

13. A program for causing a computer to carry out a method of allowing a HTTP-based terminal (1) to receive SIP-based services, wherein steps executed by the computer in accordance with the program includes the steps of any of claims 9 to 12.
